# EUROPÄISCHE PATENTSCHRIFT

(11) **EP 4 190 476 B1**
(45) Veröffentlichungstag und Bekanntmachung des Hinweises auf die Patenterteilung: **18.02.2026**
(21) Anmeldenummer: 22206795.1
(22) Anmeldetag: 10.11.2022
(51) Int. Cl.: B23K 15/00, B23K 15/04, B23K 26/12, B23K 26/282

(54) **VORRICHTUNG UND VERFAHREN ZUM LASERSTRAHLSCHWEISSEN VON DICKWANDIGEN ROHREN UND DRUCKBEHÄLTERN**
DEVICE AND METHOD FOR LASER BEAM WELDING OF THICK-WALLED PIPES AND PRESSURE VESSELS
DISPOSITIF ET PROCÉDÉ DE SOUDAGE PAR FAISCEAU LASER DE TUBES À PAROI ÉPAISSE ET DE RÉCIPIENTS SOUS PRESSION

(30) Priorität: 11.11.2021 DE 102021129395
(43) Veröffentlichungstag der Anmeldung: 07.06.2023
(73) Patentinhaber: Universität Stuttgart, 70174 Stuttgart (DE)
(72) Erfinder: Werz, Martin, 70563 Stuttgart (DE); Weihe, Stefan, 85114 Buxheim (DE)
(74) Vertreter: DREISS Patentanwälte PartG mbB

(56) Entgegenhaltungen:
- EP-B1- 3 468 741
- AU-B2- 500 409
- FR-A1- 2 467 657
- FR-A1- 2 519 280
- US-A- 4 638 142

## Beschreibung

Beim Elektronenstrahlschweißen werden mit sehr hohen Beschleunigungsspannungen Elektronen beschleunigt, gebündelt und mit hoher kinetischer Energie auf das zu schweißende Bauteil gerichtet. Durch die hohe Leistungsdichte und die hohe Leistung beginnt das metallische Bauteil lokal zu schmelzen und eine Dampfkapillare auszubilden. Durch den sogenannten Tiefenschweißeffekt lassen sich auch sehr dicke Bauteile (bis über 300 mm) durch sehr schmale, nahezu parallele Schweißnähte (Nahttiefen- zu Breitenverhältnis von bis etwa 50:1) auf einmal fügen. Ähnlich hohe Einschweißtiefen lassen sich auch durch Hochleistungslaser im Hochvakuum erzielen.

Beim Elektronenstrahlschweißen dickwandiger Bauteile (D > 100 mm) muss die Elektronenstrahlquelle im Hochvakuum (p < 10⁻⁴ mbar) betrieben werden. Das Vakuum sorgt unter anderem für eine starke Abnahme der Verdampfungstemperatur des geschmolzenen Werkstoffs. In Folge dessen kann sich eine ausgeprägte Kapillare bilden, die erst die sehr tiefen Schweißnähte ermöglicht. Auch gebündelte Laserstrahlen im Hochvakuum können sehr tiefen Einschweißtiefen realisieren, die bei Normaldruck nicht möglich sind.

Das heißt üblicherweise werden Vakuumkammern benötigt, die das zu schweißende Bauteil vollständig aufnehmen können, um das benötigte Vakuum bereitstellen zu können. Somit hängt die Größe der benötigten Vakuumkammern sowohl beim Elektronenstrahlschweißen als auch beim Laserstrahlschweißen im Hochvakuum von der Größe des zu verschweißenden Bauteils ab. Große Vakuumkammern sind allerdings nicht oder nur sehr schlecht transportabel und es gibt viele Bauteile, die aufgrund ihrer Größe nicht elektronenstrahlschweißbar oder im Hochvakuum laserstrahlschweißbar sind. Darüber hinaus führen große Vakuumkammern zu hohen Kosten und auch die Zeit zur Evakuierung derselben steigt stark an.

In vielen Anwendungen insbesondere aus dem Kraftwerksbereich (Kernkraftwerke, Kohlekraftwerke, solarthermische Kraftwerke, Wasserkraftwerke) müssen dickwandige Druckrohrleitungen sowie Druckbehälter (Reaktordruckbehälter, Dampferzeuger, Druckhalter) und Armaturen (Pumpen, Schieber, T-Stücke etc.) auf der Baustelle verschweißt werden.

Unter "dickwandigen" Rohren werden im Kontext dieser Erfindung druckführende Rohre aus Eisenbasis- oder Nickelbasislegierungen verstanden die im Betrieb einem Druck von mindestens 50 bar. häufig jedoch auch von mehr als 200 bar ausgesetzt sind. Die Betriebstemperaturen des Rohres und oder der darin befindlichen Medien betragen dabei mehr als 300°C, teilweise sogar über 700°C.

Die Wandstärke beträgt wenigstens 10% des RohrDurchmessers oder mindestens 20 mm, aber auch mehr als 70 mm betragen.

Die Innendurchmesser der Rohre betragen zwischen 80 mm und 5.000mm insbesondere zwischen 120 und 1000mm insbesondere zwischen 180 und 500 mm.

Als Werkstoffe kommen Stahlwerkstoffe zum Einsatz mit einem Nickel Gehalt von größer 0,7% und einem Chromgehalt größer 0,3% sowie insbesondere Stähle mit einem Chromgehalt größer 3,5% und insbesondere solche mit einem Chromgehalt größer 10% sowie Stähle mit einem Nickelgehalt größer 3% insbesondere Werkstoffe mit einem Nickelgehalt größer 10%. Vorzugsweise verfügen die Stähle über einen Kohlenstoffgehalt kleiner 0,85% vorzugsweise kleiner 0,5% und besonders bevorzugt kleiner 0,2%. Der Mangangehalt beträgt vorzugsweise mehr als 0,2 % vorzugsweise mehr als 1%.

Der Phosphor und Schwefelgehalt ist vorzugsweise kleiner 0,05% insbesondere kleiner 0,01%.

Die Druckrohrleitungen werden insbesondere für Heißdampf, Wasserstoff, CO2 und Ammoniak eingesetzt.

Aufgrund ihrer Größe und ihres hohen Gewichts können diese Bauteile (insbesondere sobald die ersten Bauteile miteinander verschweißt sind) während eines Schweißvorgangs in ihrer Lage nicht mehr verändert werden. Anders ausgedrückt: Die Schweißvorrichtung muss entlang der Schweißnaht bewegt werden. Das ist an sich schon schwer genug. Weiter erschwerend kommt hinzu, dass die Platzverhältnisse an den Schweißstellen zum Beispiel an einer Rohrleitung oder einem Druckbehälter üblicherweise sehr beengt sind. Es ist daher nicht möglich, um diese Bauteile herum, eine temporäre Vakuumkammer zu errichten.

Die DE 000019 527 048 A1 beschreibt eine Anlage zum Elektronenstrahlschweißen, die dafür ausgelegt ist sehr lange Werkstücke mit dem Elektronenstrahlschweißverfahren zu bearbeiten. Dabei umfasst die Anlage eine Vakuumkammer, die kürzer ist als das Werkstück. Das Werkstück wird nicht vollständig in die Anlage eingeführt und durch eine Dichtvorrichtung am Eintritt der Anlage abgedichtet. Die Elektronenstrahlkanone ist stationär. Das Werkstück wird durch die Anlage hindurchbewegt.

Aus der der DE 26 32 252 A1 ist eine Vorrichtung zum Herstellen von Rohren o.dgl. durch Verschweißen von Einzelschüssen mittels Elektronenstrahlschweißen bekannt. Einzelschüsse sind die Rohrabschnitte, die zu einem langen Rohr verschweißt werden. Bei dieser Vorrichtung ist die Elektronenstrahlquelle/die Elektronstrahlkanone stationär und außerhalb des Rohrs angeordnet. Das Rohr wird "unter" der Elektronstrahlkanone gedreht.

Aus der FR2 519 280 A1 ist eine Vorrichtung zum Herstellen von Rohren mittels Elektronenstrahlschweißen bekannt. Hierbei wird die Elektronenstrahlkanone im inneren der Rohre platziert und ein Vakuum um sie herum im inneren der Rohre gebildet und die Rohre mittels eines Elektronenstrahls verbunden.

Aus der FR2 467 657 A1 ist eine Vorrichtung bekannt, die eine Elektronenstrahlkanone in ein zu verschweißendes Rohr einführt und das zu verschweißende Rohr nahe der zu verschweißenden Stelle beidseitig abdichtet und den zu verschweißenden Bereich evakuiert.

Aus der EP 3 468 741 B1 ist eine Vorrichtung zum Elektronenstrahl- oder Laserschweißen bekannt, mit deren Hilfe ein lokales Vakuum außen am zu verschweißenden Rohr erzeugt wird und wo eine Schweißvorrichtung die Rohre von außerhalb in radialer Richtung geführt wird, um die Rohre zu verbinden.

Aus der DE 10 2009 041 383 A1 sind ein Verfahren und eine Anordnung zum Verbinden von offenen Hohlkörpern, wie zum Beispiel den Türmen von Windenergiekonvertern, durch Elektronenstrahlschweißen bekannt. Die Türme werden vor Ort aus mehreren Abschnitten gefügt. Dabei wird das obere Ende des Turms durch einen Deckel luftdicht verschlossen. Das untere Ende des Turms steht auf dem Fundament wird durch eine Dichtung luftdicht verschlossen. Die Elektronenstrahlkanone befindet sich im Inneren des Turms. Im Inneren des Turms wird ein Vakuum erzeugt und anschließend wird die Elektronenstrahlkanone um 360° gedreht, so dass eine umlaufende Schweißnaht entsteht. Ein wesentlicher Nachteil der DE10 2009 041 383 A1 besteht darin, dass das zu evakuierende Volumen sehr groß ist. Es nimmt mit dem Bau des Turmes bzw. der Länge der Rohrleitung zu, da die Vakuumkammer durch verschließen des Rohres an seinen Enden ergibt.

Der Erfindung liegt - ausgehend von der DE 10 2009 041 383 A1 - die Aufgabe zugrunde, das Fügen großer dickwandiger Rohre oder Segmente von Druckbehältern mittels Elektronenstrahlschweißen oder Laserstrahlschweißen im Hochvakuum weiter zu vereinfachen und zu verbessern. Diese Aufgabe wird erfindungsgemäß gelöst durch eine Vorrichtung gemäß dem beigefügten Anspruch 1.

Erfindungsgemäß sind zwei Baugruppen vorgesehen, nämlich eine Dichtplatte und ein Halteelement. Die Dichtplatte dient dazu, einen Teil des Rohrinneren oder des Behälters gegen die Umgebung abzudichten. Wenn zu beiden Seiten der Fügezone jeweils eine Dichtplatte eingesetzt wird, dann entsteht eine Vakuumkammer, die von den Dichtplatten und den Innenwänden der fügenden Rohre bzw. Behälterabschnitte begrenzt wird.

Durch Absaugen der Luft in der Vakuumkammer entsteht das gewünschte Vakuum. In diesem Vakuum kann ein Laserstrahl auf die Fügezone gerichtet werden und es entsteht eine Schweißnaht mit der notwenigen Tiefe (zum Beispiel von mehr als 100 mm). Die erfindungsgemäßen Dichtplatten können in unmittelbarer Nähe der Fügezone im Inneren des Rohrs platziert werden. In Folge dessen ist das Volumen der von den Dichtplatten begrenzten Vakuumkammer verhältnismäßig klein. Das ermöglicht bzw. vereinfacht und beschleunigt die Erzeugung eines Hochvakuums.

Weil bei großen Behältersegmenten und dickwandigen Rohren mit großem Innendurchmesser die von der Umgebungsluft auf die Dichtplatte ausgeübten Druckkräfte erheblich sind, ist jeder Dichtplatte mindestens ein Halteelement zugeordnet. Das Halteelement (beispielsweise über Aktuatoren) mit der Innenwand des Rohrs verspannt und auf diese Weise eine kraftschlüssige Verbindung etabliert. Das Halteelement und die Dichtplatte sind wiederum so miteinander verbunden, dass das Halteelement die auf die Dichtplatte wirkenden Druckkräfte aufnimmt und in das Rohr oder den Behälter einleitet.

Durch die "aufgelöste" Bauweise mit Dichtplatten und Halteelementen ist es möglich, eine sehr gute Abdichtung der Vakuumkammer zu erreichen und die dabei auftretenden großen Druckkräfte sicher in das Rohr einzuleiten.

Wenn zuerst das Halteelement gegen die Innenwand des zu fügenden Rohres verspannt wurde, kann anschließend die Dichtplatte sehr präzise konzentrisch zur Innenwand des Rohrs positioniert werden, so dass der (Dicht-)Spalt zwischen Rohr und Dichtplatte überall gleich groß ist. Dadurch ist eine optimale Abdichtung des Spalts über den gesamten Umfang der Dichtplatte möglich.

Um die Dichtwirkung weiter zu verbessern ist in vorteilhafter Ausgestaltung der Erfindung vorgesehen, dass die Dichtplatte an ihrem Außendurchmesser mindestens eine Dichtung aufweist die dazu dient, den Spalt zwischen der Innenwand des Rohrs oder des Behälters und der Dichtplatte abzudichten. Die Dichtung kann als ausblasbarer ringförmiger Schlauch, als O-Ring oder als Lippendichtung ausgeführt sein. Der Schlauch bzw. der O-Ring kann in einer Nut am Außendurchmesser der Dichtplatte eingesetzt werden. Die Nut ermöglicht einen festen Sitz der Dichtung in der Dichtplatte. Andererseits die Dichtung mit einer gewissen radialen Spannung zwischen der die Nut und dem Rohr eingeklemmt werden. Das verbessert die Dichtwirkung.

Die Dichtungen können als aufblasbarer Schlauch ausgebildet sein. Sie werden dann drucklos montiert. Wenn sich die Dichtplatte und die Dichtungen in der gewünschten Position befinden, wird die aufblasbare Dichtung mit Druckluft befüllt. Dadurch dehnen sie sich aus und dichten den Spalt zwischen Dichtplatte und Innenwand des Rohrs sehr gut ab.

Um die Dichtwirkung weiter zu verbessern sind in vorteilhafter Ausgestaltung der Erfindung zwei oder mehr hintereinander angeordnete Dichtungen an dem Außendurchmesser der Dichtplatte vorgesehen. Jede dieser Dichtungen kann in einer separaten Nut aufgenommen werden. Durch die Hintereinanderschaltung mehrerer Dichtungen wird die Dichtheit des Gesamtsystems bzw. der Dichtplatte verbessert. Außerdem wird die Druckbelastung jeder einzelnen Dichtung reduziert.

In weiterer vorteilhafter Ausgestaltung der Erfindung ist zwischen zwei benachbarten Dichtungen in der Dichtplatte ein ringförmiger Unterdruckraum ausgebildet. In diesem Unterdruckraum kann über eine Saugleitung gezielt ein Unterdruck erzeugt werden, der zwischen dem Hochvakuum in der Vakuumkammer und dem Umgebungsdruck liegt. Dadurch können kleine Leckagemengen abgesaugt werden, die durch den Spalt zwischen der Innenwand des Rohrs und der Dichtplatte gelangen. In Folge dessen kann trotz einer gewissen Undichtigkeit er Dichtplatten bzw. der Dichtungen in der von den Dichtplatten begrenzten Vakuumkammer ein ausreichendes Hochvakuum erzeugt werden, zum Beispiel von 10⁻⁴ mbar. Ein solches Hochvakuum reicht aus, um das Laserschweißen von Bauteilen mit großen Wandstärken (beispielsweise von 300 mm oder mehr) sicher und effektiv durchzuführen.

Anstelle eines O-Rings oder einer Lippendichtung aus Kunststoff können die Dichtungen auch als Metalldichtung ausgeführt sein. Beispielsweise können sie als Faltenbalg ausgeführt sein und die Dichtung kann mit der Innenwand des Rohrs verlötet oder verschweißt werden. Es ist selbstverständlich in vielen Fällen auch möglich, die Dichtlippe mit der Innenwand des Rohrs zu verkleben. Dabei muss man sich vor Augen halten, dass der Wärmeeintrag beim Elektronenstrahlschweißen oder auch beim Laserstrahlschweißen im Hochvakuum sehr gering ist.

Durch eine geeignete Gestaltung der Dichtlippe wird diese durch die Druckdifferenz zwischen Vakuumkammer und der Umgebung gegen die Innenwand des Rohrs gedrückt; es entsteht somit eine selbstverstärkende Dichtwirkung.

Das Halteelement wird vorteilhafterweise kraftschlüssig an der Innenwand des Rohrs oder des Behälters befestigt. Es ist Dazu ist es beispielsweise möglich über den Umfang des Halteelements verteilt mehrere Aktuatoren, beispielsweise in Form von Spannschrauben oder hydraulischen Aktuatoren vorzusehen, deren Stempel sich gegen die Innenwand des zu verschweißenden Rohrs abstützen. Durch diese Kraft wird ein Reibschluss zwischen dem Halteelement und dem Rohr hergestellt, so dass das Halteelement auch große pneumatische Kräfte, die auf die Dichtplatte wirken und von der Dichtplatte auf das Halteelement übertragen werden, sicher in die Innenwand des Rohrs eingeleitet werden können.

Es ist auch möglich, an der Innenwand des Rohrs temporäre Befestigungspunkte anzuschweißen und das Halteelement mit diesen temporären Befestigungspunkten zu verschrauben. Nachdem die Elektronenstrahlschweißung abgeschlossen ist, können die Dichtplatte und das Halteelement entfernt werden und gegebenenfalls anschließend die temporären Befestigungspunkte von der Innenwand des Rohrs entfernt werden.

In weiterer vorteilhafter Ausgestaltung ist an dem Halteelement eine Elektronenstrahlkanone bzw. Laseroptik, eine Umlenkeinrichtung, ein Drehantrieb und/oder eine Positioniereinrichtung für die Elektronenstrahlkanone bzw. den Laserstrahl vorhanden. Diese Konfiguration ist dann besonders vorteilhaft, wenn sich das Halteelement im Inneren der von der Dichtplatte begrenzten Vakuumkammer befindet. Dann kann das Halteelement gleichzeitig als Basis oder Träger der Elektronenstrahlkanone bzw. der Laseroptik, der Umlenkeinrichtung eines Drehantriebs und/oder einer Positioniereinrichtung für die Elektronenstrahlkanone bzw. den Laserstrahl genutzt werden. Der Drehantrieb sorgt dafür, dass die Elektronenstrahlkanone bzw. die Laseroptik, wenn sie radial ausgerichtet ist, eine Schwenkbewegung von 360° durchführen kann. Dann kann eine umlaufende Schweißnaht (Umfangsnaht) erzeugt werden, indem die Elektronenstrahlkanone bzw. die Laseroptik einmal um 360° um die Längsachse des zu verschweißenden Rohrs gedreht wird.

Alternativ ist es auch möglich, die Elektronenstrahlkanone oder Laseroptik parallel zur Längsachse des zu verschweißenden Rohrs anzuordnen. Dann wird der Elektronenstrahl bzw. Laserstrahl über eine Umlenkeinrichtung in eine radiale Richtung umgelenkt. Über eine entsprechende Ansteuerung der Umlenkeinrichtung kann der Elektronenstrahl bzw. Laserstrahl an der der Fügestelle entlanggeführt werden, so dass die gewünschte Umfangsschweißnaht entsteht.

Durch Bewegung des Elektronenstrahls bzw. Laserstrahls in Umfangsrichtung werden die wenigstens abschnittsweise näherungsweise zylindrischen Werkstücke stumpf verschweißt.

Die Elektronenstrahlkanone bzw. Laseroptik kann zur Ausführung der Umfangsnähte in Umfangsrichtung bewegt (rotiert) werden. Alternativ kann nur der Elektronenstrahl in die radiale Richtung umgelenkt werden. Das geschieht mittels einer Strahlablenkungs- oder Umlenkeinrichtung, die Magneten und / oder geeigneten elektrischen Feldern umfasst. Im Fall von Laserschweißen im Hochvakuum geschieht die Ablenkung mittels eines oder mehrere Spiegel.

Es ist auch möglich, das von einer Laserlichtquelle erzeugte Laserlicht durch ein Lichtleitkabel bzw. ein Glasfaserkabel zu leiten. Dann kann die Laserlichtquelle außerhalb der Vakuumkammer angeordnet werden. Der von der Laserlichtquelle erzeugte Laserstrahl wird über ein Lichtleitkabel/ eine Glasfaserleitung in die Vakuumkammer geleitet. Dadurch kann die Vakuumkammer sehr klein gehalten werden. In Folge dessen ist es einfacher und schneller möglich, das zum Fügen der Bauteile erforderliche Hochvakuum zu erzeugen.

Darüber hinaus entstehen beim Laserstrahlschweißen - anders als beim Elektronenstrahlschweißen - keine Röntgenstrahlen. Anders ausgedrückt: Die Arbeitssicherheit ist beim Laserstrahlschweißen einfacher zu gewährleisten als beim Elektronenstrahlschweißen.

Die axiale Ausrichtung der Elektronenkanone bzw. Laseroptik eignet sich besonders bei kleineren Rohrdurchmessern. Hier kann dann der Elektronenstrahl ohne Bewegung der Strahlquelle abgelenkt werden. Die Strahlablenkung kann entweder alleine durch die elektrische Ansteuerung von Spulen oder Elektromagneten oder aber durch mechanische Rotation einer Strahlablenkungseinheit, die Spulen und oder Elektromagnete beinhaltet, geschehen. In letzterem Fall kann diese Einheit auch noch Fokussiervorrichtungen (Spulen, Magnete etc.) beinhalten. Im Falle der Laseroptik können zum Ablenken des Strahls Spiegel oder Prismen eingesetzt werden.

Wie bereits oben erwähnt, ist bei vielen Ausführungsformen der Erfindung, jeder Dichtplatte ein oder mehrere Halteelemente zugeordnet. Die Halteelemente sind mit der Innenwand des Rohrs kraftschlüssig verbunden und leiten die auf die Dichtplatte(n) wirkenden Druckkräfte in des zu fügende Rohr ein. Es sind zwei Konstellationen möglich.

Das Halteelement kann außerhalb der Dichtplatte bzw. der Vakuumkammer angeordnet sein. In diesem Fall kann es vorteilhaft sein, an der Dichtplatte eine Elektronenstrahlkanone, eine Umlenkeinrichtung, einen Drehantrieb und/oder eine Positioniereinrichtung für die Elektronenstrahlkanone oder den Drehantrieb vorzusehen.

Das Halteelement kann innerhalb der Dichtplatte, d. h. in der Vakuumkammer, angeordnet sein. In diesem Fall kann es vorteilhaft sein, an dem Halteelement eine Elektronenstrahlkanone, eine Umlenkeinrichtung, einen Drehantrieb und/oder eine Positioniereinrichtung für die Elektronenstrahlkanone oder den Drehantrieb vorzusehen.

Die erfindungsgemäße Dichtplatte weist vorteilhafterweise einen oder zwei Saugleitungen auf, über die ein Unterdruck erzeugt werden kann, wenn die Dichtplatte dichtend in dem zu verschweißenden Rohr montiert ist.

Es versteht sich von selbst, dass zu beiden Seiten der Fügestelle mindestens eine Dichtplatte vorgesehen sind. Nur dann kann man ein Hochvakuum im Bereich der Fügestelle erzeugen.

In der Regel ist zu beiden Seiten der Fügestelle jeweils ein Halteelement vorgesehen. Die beiden Dichtplatten zu beiden Seiten der Fügezone begrenzen dann die Vakuumkammer und die beiden Halteelemente können die auch auf die Dichtplatten wirkenden pneumatischen Kräfte aufnehmen.

Um das Halteelement bestmöglich und ohne Änderungen an der Innenwand des Rohrs befestigen zu können, sind an dem Halteelement mindestens ein Aktuator vorgesehen, um das Halteelement gegen die Innenwand des Rohrs oder des Behälters zu pressen und reibschlüssig mit ihm zu verbinden. In der Regel wird man jedoch mehrere solche Aktuatoren vorsehen. Beispielsweise ist es möglich, über den Umfang eines Halteelements mehrere (beispielsweise 2, 3, 4, 6 oder 8) Aktuatoren vorzusehen, die radial nach außen zustellbar sind.

Sobald sich das Halteelement in der der gewünschten Position im Inneren des Rohrs oder des Behältersegments befindet, werden die Aktuatoren radial nach außen ausgefahren und das Halteelement auf diese Weise reibschlüssig in der Innenwand des Rohrs befestigt und positioniert.

Diese Aktuatoren können in einer einfachen Ausführung Schrauben ausgebildet sein. Durch Herausdrehen der Schrauben werden die Köpfe der Schrauben gegen die Innenwand des Rohrs gedrückt, so dass der gewünschte Reibschluss entsteht.

Die Aktuatoren können auch als pneumatische, hydraulische oder elektro-mechanische Aktuatoren ausgebildet sein. Sie können auch als Keile ausgebildet sein, die mit Hammerschlägen in den Spalt zwischen dem Halteelement und der Innenwand des Rohrs getrieben werden, bis das Halteelement ausreichend fest mit der Innenwand des Rohrs verspannt ist.

Um die Fügezone auch am Außendurchmesser der zu verschweißenden Rohre bzw. der zu verschweißenden Behältersegmente abzudichten ist, an der Außenwand der Rohre bzw. Behältersegmente eine Manschette zum Abdichten einer Fügezone vorgesehen, wobei die Manschette an der Außenwand des Rohrs oder des Behälters befestigt ist und die Fügezone überdeckt. Die Manschette kann beispielsweise zwei beabstandet zueinander angeordnete Dichtebenen aufweisen. Die Manschette wird so auf den zu fügenden Rohren positioniert, dass sich die Fügezone zwischen den Dichtebenen der Manschette befindet. Auf diese Weise wird auch am Außendurchmesser der Fügezogen eine Abdichtung der Fügezone gegenüber der Umgebungsluft erzielt.

Eine solche Manschette kann insbesondere durch Dichtstoffe (Silikon, Gummi, O-Ring, Dichtschnur etc. abgedichtet werden). Eine solche Manschette kann darüber hinaus über aufblasbare Dichtungen verfügen, die den Einsatz der Manschette auch bei etwas unterschiedlichen Durchmessern der zu fügenden Rohre erlaubt. Die aufblasbaren Dichtungen verfügen über einen Druckluftanschluss.

Die Abdeckung der Fügezone kann z. B. mit einem Metallring/einer Manschette erfolgen. Dieser Metzallring/diese Manschette kann außen oder innen an der Fügezone angebracht werden. Bei Bedarf kann der Werkstoff der Manschette als Schweißzugabe beim Elektronenstrahlschweißen bzw. Laserstrahlschweißen im Hochvakuum genutzt werden.

Das Abdichten der Fügezone kann auch mittels eines flexiblen (schrumpfbaren) Schlauchs oder Umwickeln der Fügezone mit einer (Schrumpf-)Folie erfolgen. Die Pressung der Folie bzw. des Schlauches auf die Rohrabschnitte kann lokal durch das Umwickeln mit Seilen, Drähten, Klemmvorrichtungen oder ähnlichem erhöht werden, um eine besser Abdichtwirkung zu erzielen.

Als Abdichtung können insbesondere bei den Dichtplatten aufblasbare Dichtungen zum Einsatz kommen. Diese haben den Vorteil, dass die Dichtplatten selbst etwas kleiner als die Innendurchmesser des Rohres gefertigt sein können und sich so zunächst leicht im Rohr positionieren bzw. verschieben lassen. Erst mit dem Aufblasen der äußeren Dichtungen/ Dichtkammern verklemmt sich die Dichtplatten im Rohr und dichtet ab.

Darüber hinaus können als Abdichtung Silikonabdichtungen, Gummimembrane, O-Ringe, Dichtpasten oder auch Schweißnähte und Lötnähte eingesetzt werden, um die Vakuumkammer mittels Deckeln in den zu verschweißenden zylindrischen Rohrabschnitten zu realisieren.

Saugleitungen sind hier nicht erforderlich. Weil die Fügezone vor Beginn der Schweißung nicht luftdicht ist, findet ein Druckausgleich zwischen der Vakuumkammer und dem von der Manschette abgedichteten Bereich statt. Eine solche Manschette kann über einen separaten Vakuumanschluss verfügen. Dann kann in vielen Fällen auf die Unterdruck-Leitungen der Dichtplatte(n) verzichtet werden.

Es ist auch möglich, die Dichtebenen der Manschette als Schweißnähte (Kehlnähte) auszuführen. Anders ausgedrückt:
Die Manschette wird außen an dem dickwandigen Rohr von Hand oder mit einem Schweißautomaten angeschweißt. Diese Schweißnaht ist nicht sehr breit und auch nur von sehr geringer Tiefe. Sie muss lediglich eine luftdichte Trennung zwischen der Fügezone und der Umgebung gewährleisten. Es ist auch möglich, die Manschette mit den zu fügenden Rohren oder Behältersegmenten zu verlöten oder mit einem Dichtmittel zu abzudichten.

Die der Erfindung zugrundeliegende Aufgabe wird auch durch ein Verfahren gemäß dem beigefügten Anspruch 10.

Durch dieses Verfahren ist es möglich, eine temporäre Vakuumkammer im Inneren der zu fügenden Bauteile (dickwandiges Rohr oder dickwandige Behältersegmente) zu installieren. Innerhalb dieser Vakuumkammer befindet sich die Laseroptik, deren Laserstrahl kann radial nach außen auf die Fügezone gerichtet werden. Aufgrund des hohen Vakuums in der Vakuumkammer ist der Dampfdruck in der Schweißnaht sehr niedrig und es ist möglich, mit dem Laserschweißen die Schweißtiefen von 300 mm oder sogar 400 mm zu erreichen. Dadurch können die Vorteile des Laserschweißens im Hochvakuum (wenig Wärmeeintrag, hohe Schweißnahtgüte und geringe Kosten) auch bei Schweißungen vor Ort in hoher Qualität und Zuverlässigkeit erstellt werden. Vor Ort bedeutet auf der Baustelle eines Kraftwerks oder auf der Baustelle eines Windenergiekonverters oder anderer vergleichbar großer und dickwandiger Bauteile.

In weiterer vorteilhafter Ausgestaltung der Erfindung wird an beiden Seiten der Fügezone ein Halteelement lösbar an der Innenwand des Rohrs oder Behälters befestigt und auch an der zweiten Seite wird eine Dichtplatte dichtend an der Innenwand des Rohrs oder des Behälters angeordnet. Diese Konstellation, nämlich mit jeweils einer erfindungsgemäßen Vorrichtung zu beiden Seiten der Fügezone ist dann besonders vorteilhaft, wenn zwei Rohrstücke miteinander verbunden werden sollen und die offenen Enden dieser Rohrstücke nicht beispielsweise durch einen Flanschdeckel oder einen aufgeschweißten Deckel verschlossen werden können. Auch bei Behältersegmenten ist diese Konfiguration besonders vorteilhaft.

Viele Werkstoffe werden zum Schweißen zur Beeinflussung des Gefüges, der Härte und der Eigenspannungen vorgewärmt. Dies ist beim Elektronenstrahlschweißen nicht üblich. Aufgrund der Größe der zu verschweißenden Teile kann dies allerdings große Vorteile haben. Die Vorwärmung kann entweder mit defokussiertem Elektronenstrahl/ Laserstrahl oder aber mit von außen angebrachten Heizmatten geschehen. In letzterem Fall ist es besonders günstig, wenn das Gehäuse der Elektronenstrahlkanone bzw. der Laseroptik sowie ggf. andere Einrichtungen der Schweißvorrichtung z. B. durch eine Wasserkühlung aktiv gekühlt werden.

Die Einschweißtiefe des Elektronenstrahls bzw. Laserstrahls kann sensorisch überwacht und geregelt werden, sodass einerseits ein sicheres Verschweißen der Rohrwandung sichergestellt ist, aber nicht durch die Abdeckung bzw. die Abdichtung durchgeschweißt wird. Als Sensor kann insbesondere die optische Kohärenztomographie eingesetzt werden. Darüber hinaus sind Röntgendetektoren, Temperatursensoren wie z.B. Thermographiekameras oder Ultraschallsensoren außerhalb des Rohres oder innerhalb der Manschette denkbar.

Bei größeren Rohrdurchmessern eignet sich vorzugsweise eine radiale Ausrichtung der Elektronenstrahlkanone bzw. Laseroptik.

Die gesamte oder Teile der Ausrüstung insbesondere die Deckel, Klemmringe, Elektronenstrahlkanone bzw. Laseroptik und deren Positioniervorrichtung können an einen sogenannten Molch montiert werden. Unter Molch wird in diesem Kontext ein Fahrzeug verstanden, das geführt durch die Wandung eines Rohres in diesem fahren kann. Insbesondere auf Ketten, Rollen, Rädern oder Kufen ...

Der Molch kann des Weiteren die Vakuumpumpen sowie die Hochspannungsversorgung und Steuerungselektronik aufnehmen. Diese können aber auch außerhalb des Rohres liegen und über Schläuche bzw. Leitungen verbunden sein.

Die Toleranzen bei der Herstellung und Montage von dickwandigen Rohrleitungen in Kraftwerken sind üblicherweise sehr viel größer als beim normalen Maschinenbau. Daher kann es sinnvoll sein Zusatzwerkstoff zuzuführen.

Dies kann in Form von Draht geschehen oder aber in Form von Metallringen oder -bändern, die auch als Manschetten bezeichnet werden. Diese werden innen und/oder außen auf den zu verschweißenden Rohren angebracht werden. Die Metallringe/Manschetten kann auch als Zusatzwerkstoff beim Elektronenstrahlschweißen bzw. Laserstrahlschweißen im Hochvakuum dienen.

Um bereitere Spalte zu überbrücken, kann es ebenfalls sinnvoll sein den Elektronenstrahl oder Laserstrahl zu pendeln. Hierzu wird der Strahl von der Ablenkeinheit zyklisch entlang der Schweißnaht links und rechts ausgelenkt.

Eine weitere Möglichkeit mit Toleranzen umzugehen, besteht darin zwischen zwei Rohren oder Rohrabschnitten ein ringförmiges Zwischenelement in die Lücke zwischen den Enden der Rohre einzusetzen und zwei Umfangsschweißnähte auszuführen. Sowohl die Rohre als auch das Zwischenelement können durch spanende Bearbeitung vorbereitet und vor Ort angepasst werden, um eine möglichst gute Passgenauigkeit im Bereich der Fügezonen zu erzielen. Zum Verschweißen müssen dann zwei Umlaufschweißnähte hergestellt werden. Es ist besonders vorteilhaft, wenn das Zwischenelement so schmal/so kurz ist, dass es in einer Aufspannung und ohne die Vakuumkammer zu verschieben, an beiden Stirnseiten mit den beiden dort befindlichen Rohrstücken verschweißt werden kann.

### Regeleinrichtung

Die Vorrichtung umfasst eine Regeleinrichtung, mit der die Einschweißtiefe präzise geregelt werden kann. Dies kann durch Veränderung der Strahlleistung, Aufweitung, Vorschubgeschwindigkeit, Steuerung der Bewegung des Laserstrahls (Hin- und Herpendeln des Strahls mit einer bestimmten Amplitude und ggf. auch Frequenz), Pulsieren (Pulsdauer) etc. geschehen.

Als Sensorelement kommen beispielsweise OCT aber auch Röntgensensoren, Ultraschallsensoren oder Wärmesensoren auf der Außenoberfläche des Rohres zum Einsatz. So ist es möglich Rohre vollständig durchzuschweißen und als Abdeckung lediglich eine einfache einlagige Schweißnaht zu verwenden.

Weitere Vorteile und vorteilhafte Ausgestaltungen der Erfindung sind der nachfolgenden Zeichnung, deren Beschreibung in den Patentansprüchen entnehmbar.

Es zeigen:
- Figur 1: einen Schnitt durch eine an sich bekannte Stumpf-) Schweißnaht) zwischen zwei dickwandigen Rohren;
- Figur 2: ein erstes Ausführungsbeispiel einer erfindungsgemäßen Vorrichtung zum Abdichten einer Fügezone und zum Laserstrahlschweißen,

- Figur 3: ein Schnitt entlang der Linie A-A,
- Figur 4: ein Schnitt entlang der Linie B-B,
- Figur 5: einen Längsschnitt durch ein zweites Ausführungsbeispiel der Erfindung,
- Figuren 6 bis 8: weitere Ausführungsbeispiele erfindungsgemäßer Halteelemente, Dichtplatten sowie die
- Figuren 9 bis 12: verschiedene Ausführungsformen erfindungsgemäßer Manschetten.

### Beschreibung der Ausführungsbeispiele

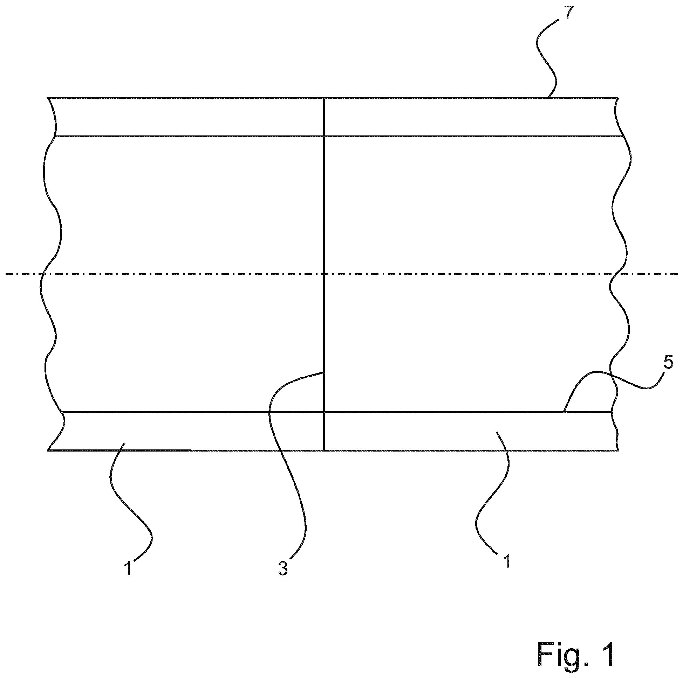

Die Figur 1 zeigt zwei dickwandige Rohre 1, die im Bereich einer Fügezone 3 miteinander verschweißt werden sollen bzw. bereits miteinander verschweißt sind. Eine Innenwand der Rohre 1 ist mit 5 bezeichnet. Die Außenwand ist mit 7 bezeichnet. Wenn solche dickwandigen Rohre 1 durch Elektronenstrahlschweißen oder durch Laserstrahlschweißen im Hochvakuum gefügt werden können, hat dies eine Reihe von großen technologischen und wirtschaftlichen Vorteilen. Das Elektronenstrahlschweißen oder Laserschweißen im Hochvakuum ist sehr leistungsfähig, der Wärmeeintrag in die Werkstücke (Rohre 1) ist verhältnismäßig gering, so dass der Verzug der Werkstücke ebenfalls gering ist. Außerdem wird das Gefüge der Rohre nur in unmittelbarer Nähe der Fügezone 3 bzw. der Schweißnaht 3 verändert. Schon in einem Abstand von nur wenigen Millimetern von der Fügezone 3 erfährt das Gefüge der Rohre 1 keine Veränderungen durch das Elektronenstrahlschweißen oder Laserstrahlschweißen im Hochvakuum. Die Vorteile dieser Schweißverfahrne sind bekannt.

Die Erfindung stellt nun eine Vorrichtung bereit, die es auch vor Ort erlaubt, beispielsweise auf der Baustelle eines Kraftwerks, Rohre 1 oder Segmente von Behältern mittels Laserstrahlschweißen im Hochvakuum sicher und wirtschaftlich zu verbinden. Dazu muss eine temporäre Vakuumkammer eingerichtet werden. Innerhalb der Vakuumkammer befindet sich eine Laserstrahloptik, welch die Rohre 1 im Bereich der Fügezone 3 miteinander verbindet.

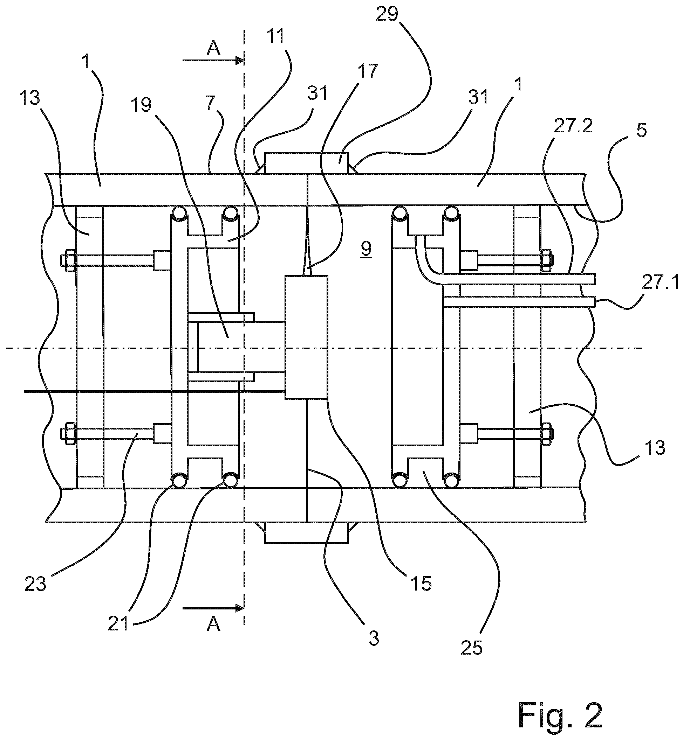

In der Figur 2 sind erste Ausführungsbeispiele der erfindungsgemäßen Vorrichtung dargestellt. Die Figur 2 zeigt die beiden Rohre 1 und die Fügezone 3 analog zu der Figur 1. Beim Elektronenstrahlschweißen oder beim Laserstrahlschweißen im Hochvakuum ist es erforderlich ein Hochvakuum im Bereich der Fügestelle 3 zu erzeugen, damit der Dampfdruck des geschmolzenen Werkstoffs reduziert wird. Nur dann können Werkstücke mit einer Dicke von weit über 100 mm sicher, leistungsfähig und kostengünstig verschweißt werden.

Mit Hilfe der erfindungsgemäßen Vorrichtung wird im Inneren der Rohre 1 eine (temporäre) Vakuumkammer 9 hergestellt. Die Vakuumkammer 9 wird in radialer Richtung durch die Rohre 1 begrenzt wird. In axialer Richtung wird die Vakuumkammer 9 durch jeweils eine Dichtplatte 11 zu beiden Seiten der Fügezone 3 begrenzt.

Um die auf die Dichtplatten 11 wirkenden, aus dem Druckunterschied zwischen Vakuumkammer 9 und Umgebung resultierenden Druckkräfte abzuleiten, ist erfindungsgemäß einer Dichtplatte 11 ein Halteelement 13 zugeordnet. Die Halteelemente 13 zu beiden Seiten der Fügezone 3 sind im Wesentlichen baugleich.

Bei den Dichtplatten 11 zu beiden Seiten der Fügezone 3 sind gewisse Unterschiede vorhanden. Die in der Figur 2 linke Dichtplatte 11 trägt eine Laserstrahloptik 15, die radial ausgerichtet ist. Ein Laserstrahl ist mit 17 bezeichnet. Die Laseroptik 15 ist auf einem Drehantrieb 19 montiert, der wiederum an der in Figur 2 linken Dichtplatte 11 aufgenommen ist. Wenn der Drehantrieb 19 aktiv ist, dann rotiert die Laseroptik 15 um die Längsachse der zu verschweißenden Rohre 1, so dass der Laserstrahl 19 die Fügezone 3 über den gesamten Umfang der Rohre 1 überstreicht, wenn der Drehantrieb 19 eine Drehbewegung von Winkel von 360° ausführt.

Die Energieversorgung der Laseroptik 15 sowie des Drehantriebs 19 und einer optionalen Positioniereinrichtung, welche die Laseroptik 15 in Richtung der Längsachse der Rohre 1 verfahren kann, ist in den Figuren nicht dargestellt. Die Laserlichtquelle kann außerhalb einer Vakuumkammer 9 angeordnet sein und das von ihr erzeugte Laserlicht über einen Lichtleiter/ein Glasfaserkabel in die Vakuumkammer 9 geleitet werden.

Die Dichtplatte 11 auf der in Figur 2 linken Seite der Fügestelle 3 umfasst zwei Dichtungen 21, die beabstandet zueinander angeordnet sind. Dadurch ergibt sich eine Serienschaltung der Dichtungen 21 und die Abdichtung der Vakuumkammer 9 zur Umgebung der Rohre 1 wird verbessert. Wenn man davon ausgeht, dass in der Vakuumkammer 9 ein Hochvakuum (mit einem Druck von beispielsweise 10⁻⁴ mbar) herrscht und außerhalb der Vakuumkammer 9 Umgebungsdruck (p = 1 bar) herrscht, dann ist es klar, dass bei Rohren 1 mit großem Innendurchmesser aufgrund der Druckdifferenz eine erhebliche Druckkraft auf die Dichtplatte 11 wirkt. Diese Druckkraft drückt die Dichtplatte 11 in Richtung der Fügezone 3.

Damit die Vakuumkammer 9 aufgrund des Druckunterschieds zur Umgebung nicht kollabiert, sondern die Dichtplatten 11 in der gewünschten Position bleiben, sind erfindungsgemäß Halteelemente 13 vorgesehen. Die Halteelemente 13 werden so gegen die Innenwand 5 der Rohre 1 verspannt, dass ein Reibschluss zwischen den Halteelementen 13 und den Rohren 11 entsteht. Über Stützelemente oder Zugstäbe 23 sind die Dichtplatten 11 mit den Halteelementen 13 gekoppelt, so dass die auf die Dichtplatten 11 wirkenden Druckkräfte auf die Halteelemente 13 übertragen werden. Die Halteelementen 13 übertragen diese Kräfte durch den erwähnten Reibschluss auf die Rohre 1. Dadurch sind die auf die Dichtplatten 11 wirkenden Kräfte inneren Kräfte der zu fügenden Rohre 1 und es wird eine sehr gute Abdichtung der Vakuumkammer 9 im Inneren der Rohre 1 erreicht, auch bei großen Innendurchmessern der Rohre 1.

Bei den in der Figur 2 dargestellten Ausführungsbeispielen von Dichtplatte 11 sind zwei Dichtungen 21 vorgesehen. Zwischen den beiden Dichtungen 21 ist ein ringförmiger Unterdruckraum 25 ausgebildet ist. Eine erste Unterdruckleitung 27.1 mündet in der Vakuumkammer 9 und eine zweite Unterdruckleitung 27.2 mündet in den ringförmigen Unterdruckraum 25.

In dem Unterdruckraum 25 kann beispielsweise ein Unterdruck Vakuum von 10⁻¹ mbar herrschen, während in der Vakuumkammer 9 ein Hochvakuum von beispielsweise 10⁻⁴ mbar herrschen kann. In Folge dessen wird die Druckdifferenz zwischen dem Hochvakuum in der Vakuumkammer 9 und dem Umgebungsdruck außerhalb der Rohre 1 in zwei Stufen abgebaut wird, so dass die auf die Dichtungen 21 wirkenden Druckdifferenzen verringert werden. Der Unterdruck im Unterdruckraum 25 wird, ähnlich wie bei der Vakuumkammer 9, dadurch erzeugt, dass über eine Saugleitung 27 Luft aus dem Unterdruckraum 25 abgesaugt wird.

Es ist auch möglich, die Druckdifferenz zwischen der Vakuumkammer 9 und der Umgebung in mehr als zwei Stufen abzubauen.

Es ist ausreichend, wenn nur an einer Dichtplatte 11 eine oder mehrere Unterdruckleitungen 27, 27.1, 27.2 vorgesehen ist. Bei dem in Figur 2 dargestellten Ausführungsbeispiel ist dies die rechte Dichtplatte 11, während die linke Dichtplatte keine Saugleitungen aufweist, sondern die Laseroptik 15 und die zugehörigen Hilfsaggregate trägt.

Damit während des Schweißens keine Luft durch die Fügezone 3 von außen in die Vakuumkammer 9 gelangt, ist am Außendurchmesser der Rohre eine Manschette 29 angeordnet. Die Manschette 29 kann aus mehreren kreisförmig gebogenen Stahlstreifen bestehen, die rechts und links mit einer Schweißnaht 31 an der Außenwand 7 der Rohre 1 luftdicht angeschweißt sind. Diese Schweißnähte 31 haben zusammen mit der Manschette 29 nur die Funktion, die gewünschte Dichtheit herzustellen. Sie tragen nicht zur Festigkeit der Fügeverbindung / der Schweißverbindung zwischen den beiden Rohren 1 bei. Sie können, falls gewünscht, nach dem Ende des Elektronenstrahlschweißvorgangs auch wieder entfernt werden.

In der Figur 2 ist eine Konfiguration dargestellt bei der die Halteelemente 13 außerhalb der Vakuumkammer 9 abgeordnet sind. In diesem Fall werden die auf eine Dichtplatte 11 ausgeübten Druckkräfte mittels Zugstangen 23 an das Halteelement 13 übertragen. Diese Kräfte werden über den Reibschluss zwischen Halteelement 13 und dem Rohr 1 in dieses eingeleitet.

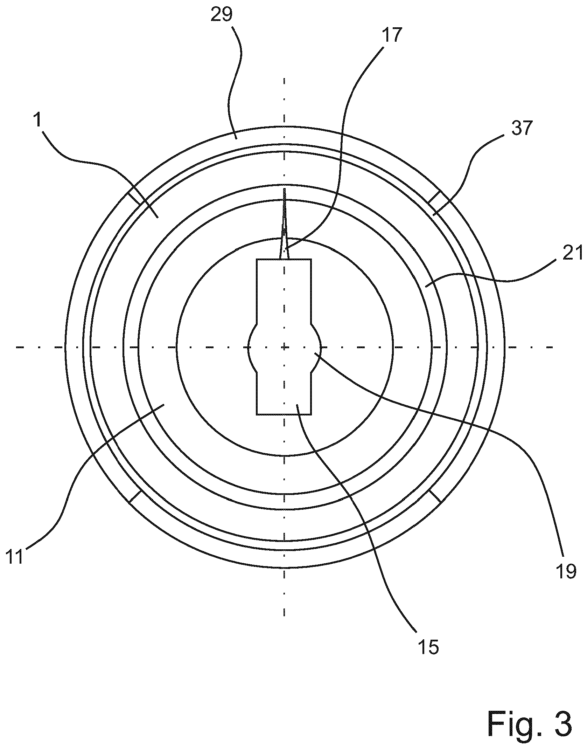

In der Figur 3 ist ein Schnitt durch die entlang der Linie A-A in der Figur 2 dargestellt. In dieser Ansicht kann man die Manschette 29, eine der Schweißnähte 31, die Laserkanone 15 sowie die Dichtplatte 11 mit den Dichtungen 21 gut erkennen.

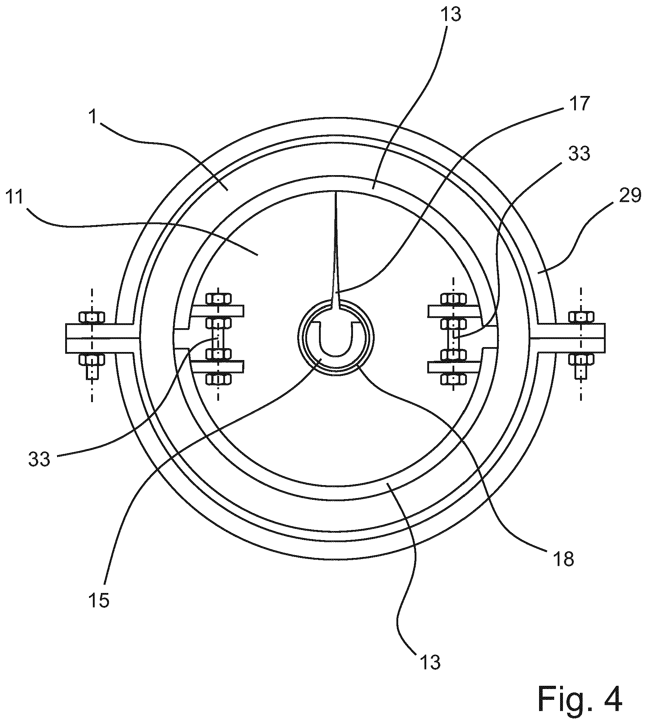

In der Figur 4 ist eine Ansicht von links auf das Halteelement 13 dargestellt. Bei diesem Ausführungsbeispiel ist die Manschette 29 zweiteilig ausgeführt. Die beiden Hälften der Manschette 29 werden um die Rohre 1 gelegt und mit Hilfe von Schrauben (ohne Bezugszeichen) dichtend gegen die Außenwand 7 der Rohre 1 gezogen.

Anhand der Figur 4 ist auch zu erkennen, dass das Halteelement 13 zwei Schalen umfasst, die über Aktuatoren relativ zueinander bewegt werden können. Die Aktuatoren umfassen jeweils Schrauben 33 und Muttern mit deren Hilfe die beiden Hälften des Halteelements 13 gegen die Innenwand 5 der Rohre 1 gepresst werden können. Je weiter man die Schrauben aus den Muttern herausdreht, desto größer ist die Anpresskraft, mit der das Halteelement 13 gegen das Rohr 1 gepresst wird und desto größer sind auch die durch Haftreibung zwischen dem Halteelement 13 und dem Rohr 1 übertragbaren Kräfte.

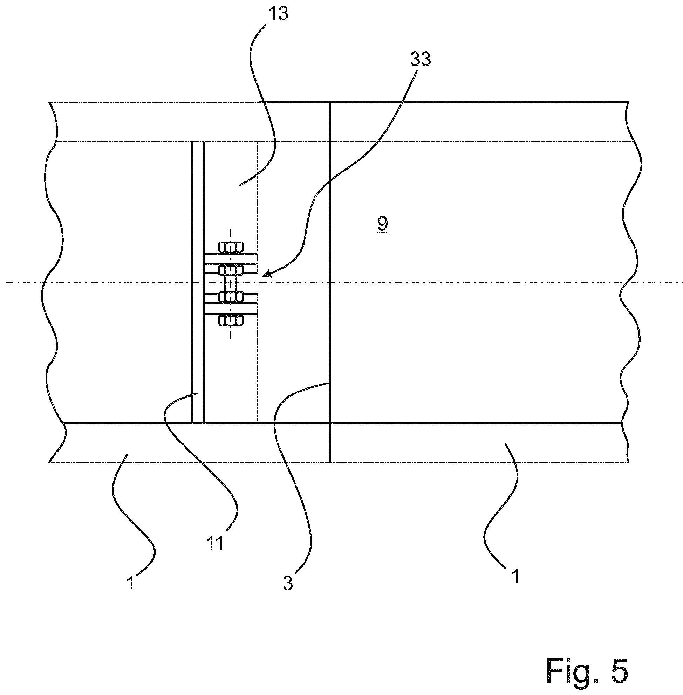

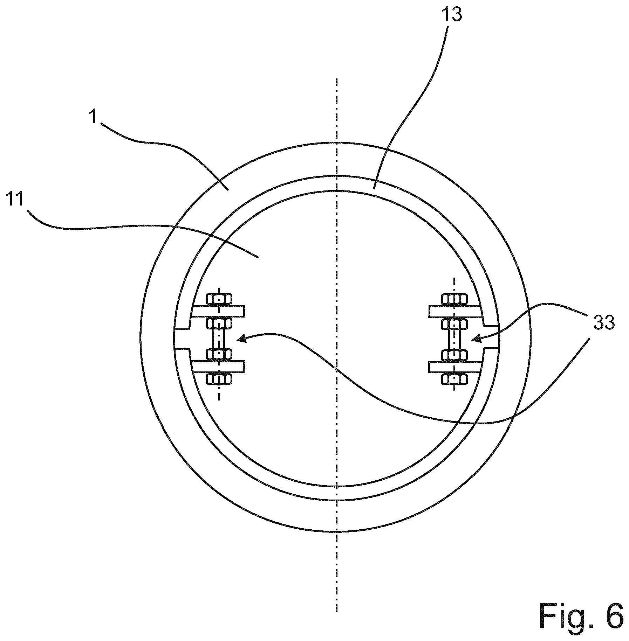

In den Figuren 5 und 6 ist eine weitere erfindungsgemäße Konstellation einer Vorrichtung zum Abdichten einer Fügezone 3 dargestellt. Es ist nur eine Dichtplatte 11 (links von der Fügezone 3) dargestellt. Bei diesem Ausführungsbeispiel ist das Halteelement 13 im Inneren der Vakuumkammer 9 angeordnet. Das heißt, die Dichtplatte 11 befindet ist weiter von der Fügezone 3 entfernt als das Halteelement 13.

In diesem Fall kann auf die Zugstäbe 23 verzichtet werden, weil die Dichtplatte 11 gegen das Halteelement 13 gedrückt wird.

In der Figur 6 ist ein Blick von der Vakuumkammer 9 in Richtung des Halteelements 13 und der dahinter angeordneten Dichtplatte 11 dargestellt.

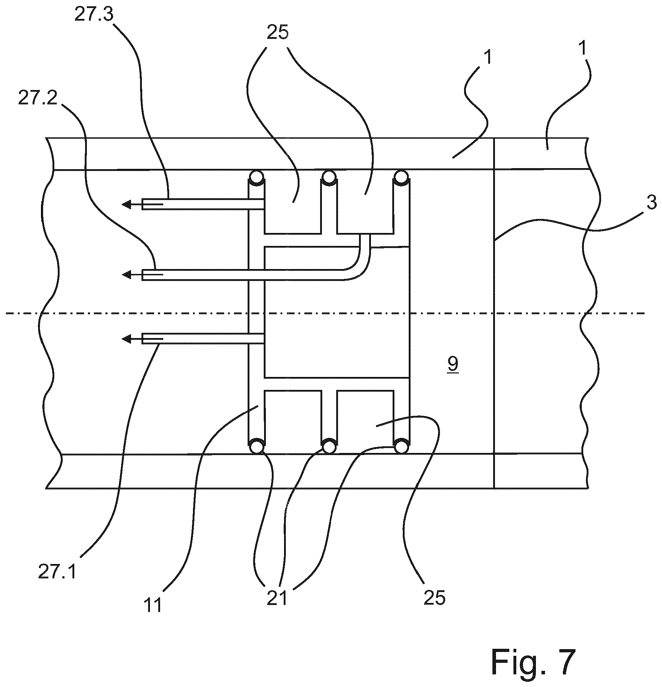

In der Figur 7 ist ein Ausführungsbeispiel einer Dichtplatte 11 dargestellt, die drei parallel zueinander angeordnete Dichtungen 21 und zwei ringförmige Unterdruckräume 25 aufweist. Jede dieser Unterdruckräume 25 ist über eine gesonderte Unterdruckleitung 27.2 und 27.3 mit einer (nicht dargestellten) Vakuumpumpe verbunden. Die Vakuumleitung 27.1 mündet direkt in die Vakuumkammer 9.

Bei diesem Ausführungsbeispiel wird die Druckdifferenz zwischen dem Hochvakuum in der Vakuumkammer 9 und der Umgebung in mehreren Stufen abgebaut. Dadurch wird eine noch bessere Abdichtung erreicht und die Dichtungen 21 werden weniger belastet.

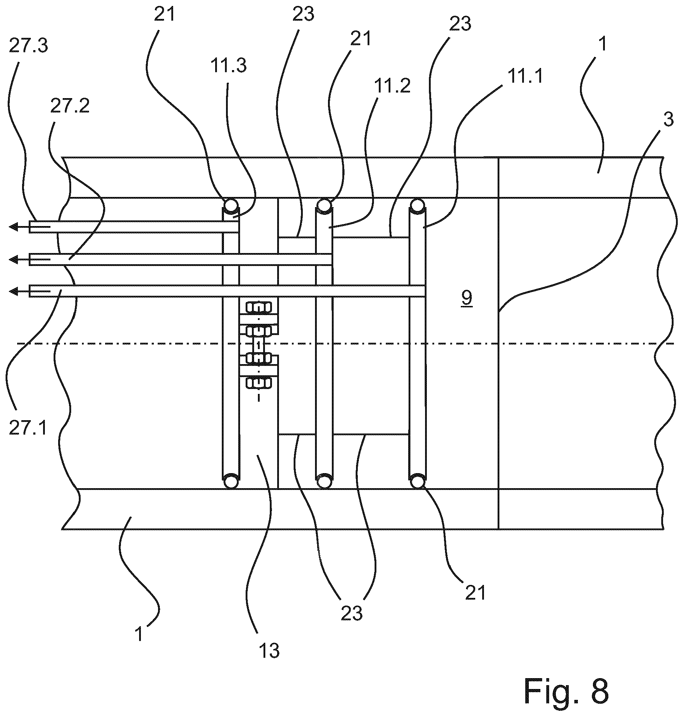

Eine analoge Ausführungsform, bei der jedoch das Halteelement 13 in der Vakuumkammer 9 angeordnet ist, ist in der Figur 8 dargestellt.

Dieses Ausführungsbeispiel umfasst drei separate Dichtplatten 11.1, 11.2 und 11.3 mit jeweils einer Dichtung 21. Zu jeder Dichtplatte 11.1, 11.2 und 11.3 gehört eine Unterdruckleitung 27.1, 27.2 und 27.3. Diese Unterdruckleitungen erlauben es, in mehreren Stufen den Druckunterschied zwischen dem Hochvakuum in der Vakuumkammer 9 und dem Umgebungsdruck abzubauen bzw. abzudichten. Die auf die Dichtplatte 11.3 wirkenden Druckkräfte werden direkt in das Halteelement 13 eingeleitet. Die Dichtplatten 11.1 und 11.2 sind über Zugstangen 23 mit dem Halteelement 13 verbunden.

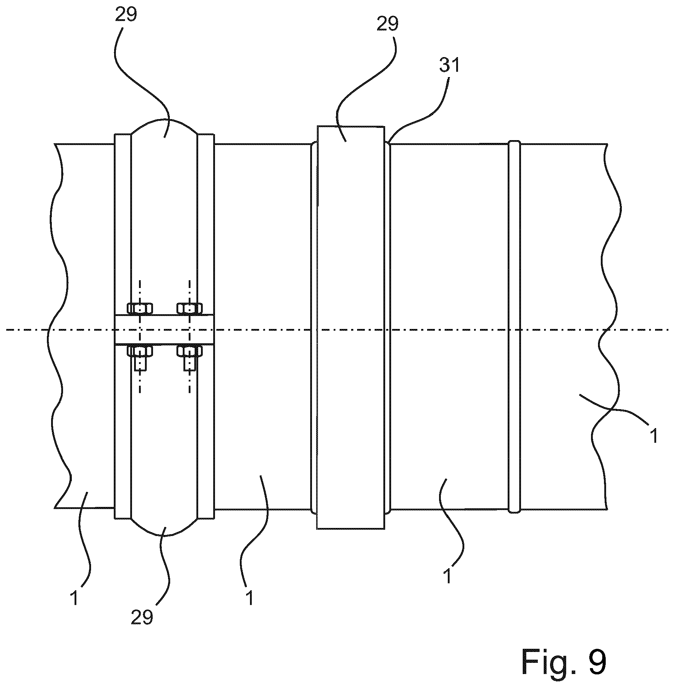

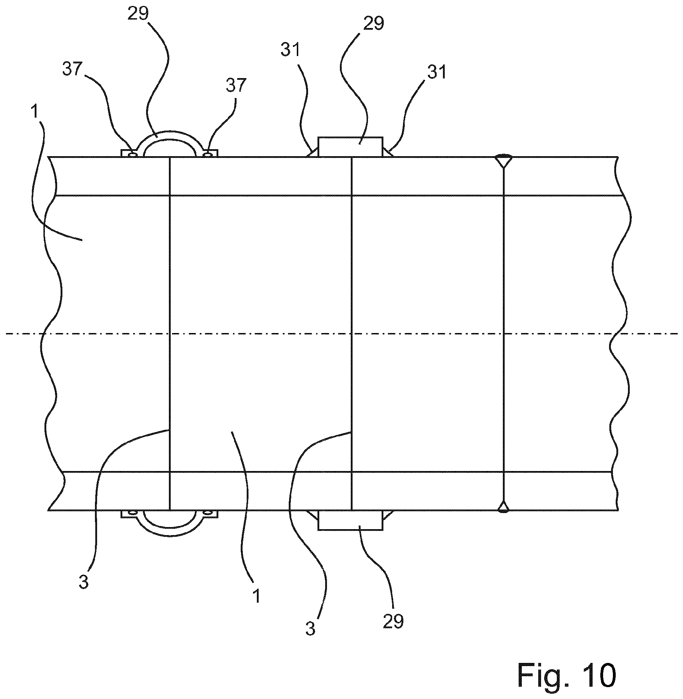

In den Figuren 9 und 10 sind drei Formen von Manschetten 29 an der Außenseite der Rohre 1 dargestellt. Ganz links ist eine zweiteilige Manschette 29 dargestellt, die aus zwei Halbschalen besteht. Die Halbschalen der Manschette 29 werden an der Außenwand 7 der Rohre 1 rechts und links der Fügezone 3 befestigt. Um eine möglichst gute Abdichtung zwischen der Manschette 29 und den Rohren 1 zu gewährleisten, ist zwischen der Manschette 29 und der Außenwand 7 der Rohre 1 jeweils eine Dichtung 37 eingelegt. Die Dichtung 37 ist bevorzugt eine aufblasbare Dichtung.

In der Mitte der Figuren 9 und 10 ist die Manschette 29 als angeschweißter Ring mit Schweißnähten 31 dargestellt.

Dieses Ausführungsbeispiel ist in der Figur 2 bereits erläutert worden. Ganz rechts in den Figuren 9 und 10 ist ein drittes Ausführungsbeispiel dargestellt, bei der die Abdichtung mit Hilfe einer Hilfsschweißnaht am Außendurchmesser der Rohre 1 im Bereich der Fügezone 3 erfolgt.

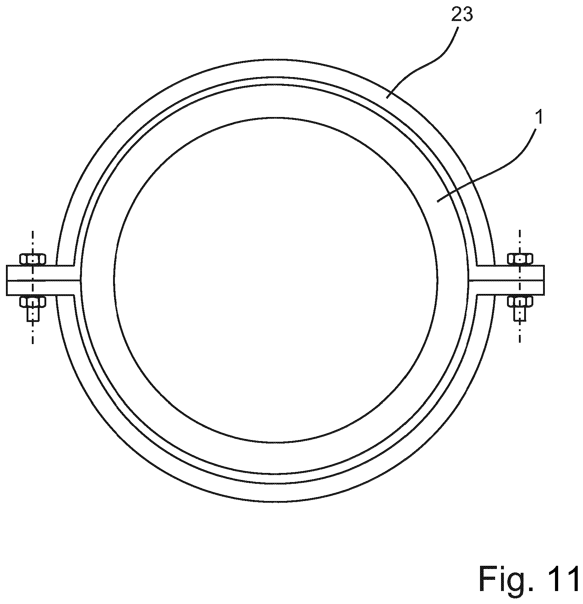

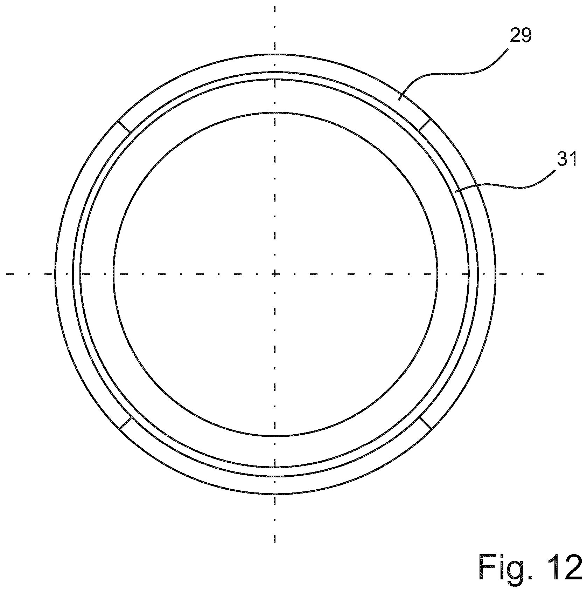

Die Figuren 11 und 12 zeigen eine Seitenansicht auf die in den Figuren 8 und 9 dargestellte teilbare Manschette 29 und die angeschweißte Manschette 29.

Mit dem Elektronenstrahl- und dem Laserschweißen können sowohl Stumpf- als auch Überlappnähte hergestellt werden. Die Erfindung wurde anhand von Stumpfschweißnähten erläutert, ohne die Erfindung darauf zu beschränken.

## Patentansprüche

1. Vorrichtung zum Abdichten einer Fügezone (3) zwischen zwei dickwandigen Rohren (1) oder Behältersegmenten umfassend mindestens eine Dichtplatte (11) und ein Halteelement (13), wobei das Halteelement (13) lösbar an einer Innenwand (5) des Rohrs (1) oder des Behälters befestigbar ist, wobei das Halteelement (13) die auf die Dichtplatte (11) wirkenden Druckkräfte aufnimmt und in das Rohr (1) oder den Behälter oder eine zweite Dichtplatte einleitet, und wobei an der Dichtplatte (11) eine Laseroptik (15) vorhanden ist.

2. Vorrichtung nach Anspruch 1, **dadurch gekennzeichnet, dass** die Dichtplatte (11) an ihrem Außendurchmesser mindestens eine Dichtung (21) aufweist, und dass die Dichtung (21) zum Abdichten des Spaltes zwischen der Innenwand (5) des Rohrs (1) oder des Behälters und der Dichtplatte (11) ausgebildet ist.

3. Vorrichtung nach Anspruch 2, **dadurch gekennzeichnet, dass** die Dichtplatte (11) an ihrem Außendurchmesser zwei oder mehr hintereinander angeordnete Dichtungen (21) aufweist, und dass die Dichtungen (21) zum Abdichten des Spaltes zwischen der Innenwand (5) des Rohrs (1) oder des Behälters und der Dichtplatte (11) ausgebildet ist .

4. Vorrichtung nach Anspruch 3, **dadurch gekennzeichnet, dass** die Dichtungen (21) zum Ausbilden eines ringförmigen Unterdruckraums (25) zwischen zwei benachbarten Dichtungen (21) ausgebildet sind, und dass eine Unterdruckleitung (27.2) zum Münden in den ringförmigen Unterdruckraum (25) ausgebildet ist.

5. Vorrichtung nach einem der Ansprüche 2 bis 4, **dadurch gekennzeichnet, dass** die Dichtungen (21) aufblasbarer ringförmiger Schlauch, als O-Ring oder als Lippendichtung ausgebildet sind.

6. Vorrichtung nach einem der Ansprüche 2 bis 4, **dadurch gekennzeichnet, dass** die Dichtungen (21) als Metalldichtung ausgebildet sind.

7. Vorrichtung nach einem der vorhergehenden Ansprüche, **dadurch gekennzeichnet, dass** an der Dichtplatte (11) eine Umlenkeinrichtung, ein Drehantrieb (19) und/oder eine Positioniereinrichtung vorhanden sind.

8. Vorrichtung nach einem der vorhergehenden Ansprüche, **dadurch gekennzeichnet, dass** an der Dichtplatte (11) mindestens eine Unterdruck-Leitung (27) vorgesehen ist.

9. Vorrichtung nach einem der vorhergehenden Ansprüche, **dadurch gekennzeichnet, dass** das Halteelement (13) mindestens einen Aktuator umfasst, um das Halteelement (13) gegen die Innenwand (5) des Rohrs (1) oder des Behälters zu pressen und reibschlüssig mit ihm zu verbinden.

10. Verfahren zum Fügen von zwei dickwandigen Rohren (1) oder Behältersegmenten durch eine Umfangsrundnaht, wobei mindestens zu einer Seite einer Fügezone (3) ein Halteelement (13) lösbar an einer Innenwand (5) des Rohrs (1) oder des Behälters befestigt wird, wobei mindestens zu einer Seite der Fügezone (3) eine Dichtplatte (11) dichtend an der Innenwand (5) des Rohrs (1) oder des Behälters angeordnet wird, wobei die Dichtplatte (11) und das Halteelement (13) derart miteinander gekoppelt sind, dass das Halteelement (13) die auf die Dichtplatte (11) wirkenden Druckkräfte aufnimmt und in das Rohr (1) bzw. das Behältersegment ableitet, wobei die Luft in einer Vakuumkammer (9) im Inneren des Rohrs (1) oder des Behältersegments abgesaugt wird, und wobei anschließend eine Umfangsrundnaht durch Laserschweißen erzeugt wird.

11. Verfahren nach Anspruch 10, **dadurch gekennzeichnet, dass** zu beiden Seiten der Fügezone (3) ein Halteelement (13) lösbar an einer Innenwand (5) des Rohrs (1) oder des Behälters befestigt wird und eine Dichtplatte (11) dichtend an der Innenwand (5) des Rohrs (1) oder des Behälters angeordnet wird.

12. Verfahren nach Anspruch 10 oder 11, **dadurch gekennzeichnet, dass** die Dichtplatte (11) an ihrem Außendurchmesser mindestens eine Dichtung (21) aufweist, dass die Dichtung (21) den Spalt zwischen der Innenwand (5) des Rohrs (1) oder des Behälters und der Dichtplatte (11) abdichtet, dass die Dichtung (21) als Metalldichtung ausgebildet ist, und dass die Dichtung (21) mit der Innenwand (5) des Rohrs (1) verlötet oder verschweißt wird.

13. Verfahren nach einem der Ansprüche 10 bis 12, **dadurch gekennzeichnet, dass** das Halteelement (13) kraftschlüssig an der Innenwand (5) des Rohrs (1) oder des Behälters befestigt wird.

14. Verfahren nach einem der Ansprüche 10 bis 12, **dadurch gekennzeichnet, dass** an der Innenwand (5) des Rohrs (1) oder des Behälters temporäre Befestigungspunkte angeschweißt sind, und dass das Halteelement (13) oder die Dichtplatte (11) mit den temporären Befestigungspunkten verschraubt ist.

## Claims

1. Device for sealing a joint zone (3) between two thick-walled pipes (1) or container segments comprising at least one sealing plate (11) and a retaining element (13), wherein the retaining element (13) is detachably attachable to an inner wall (5) of the pipe (1) or of the container, wherein the retaining element (13) absorbs the pressure forces acting on the sealing plate (11) and introduces them into the pipe (1) or the container or a second sealing plate, and wherein laser optics (15) are provided on the sealing plate (11).

2. Device according to claim 1, **characterized in that** the sealing plate (11) has at least one seal (21) on its outer diameter, and **in that** the seal (21) is designed to seal the gap between the inner wall (5) of the pipe (1) or of the container and the sealing plate (11).

3. Device according to claim 2, **characterized in that** the sealing plate (11) has two or more seals (21) arranged one behind the other on its outer diameter, and **in that** the seals (21) are designed to seal the gap between the inner wall (5) of the pipe (1) or of the container and the sealing plate (11).

4. Device according to claim 3, **characterized in that** the seals (21) are designed to form an annular vacuum space (25) between two adjacent seals (21), and **in that** a vacuum line (27.2) is designed to open into the annular vacuum space (25).

5. Device according to any of claims 2 to 4, **characterized in that** the seals (21) are designed as inflatable annular hoses, as O-rings or as lip seals.

6. Device according to any of claims 2 to 4, **characterized in that** the seals (21) are designed as metal seals.

7. Device according to any of the preceding claims, **characterized in that** a deflection apparatus, a rotary drive (19) and/or a positioning apparatus are present on the sealing plate (11).

8. Device according to any of the preceding claims, **characterized in that** at least one vacuum line (27) is provided on the sealing plate (11).

9. Device according to any of the preceding claims, **characterized in that** the retaining element (13) comprises at least one actuator to press the retaining element (13) against the inner wall (5) of the pipe (1) or of the container and to connect it frictionally to the pipe or container.

10. Method for joining two thick-walled pipes (1) or container segments by means of a circumferential weld, wherein a retaining element (13) is detachably attached to an inner wall (5) of the pipe (1) or of the container at least on one side of a joint zone (3), wherein a sealing plate (11) is arranged in a sealing manner on the inner wall (5) of the pipe (1) or of the container at least on one side of the joint zone (3), wherein the sealing plate (11) and the retaining element (13) are coupled to one another such that the retaining element (13) absorbs the pressure forces acting on the sealing plate (11) and transfers them into the pipe (1) or the container segment, wherein the air is extracted in a vacuum chamber (9) inside the pipe (1) or the container segment, and wherein a circumferential weld is subsequently produced by laser welding.

11. Method according to claim 10, **characterized in that** a retaining element (13) is detachably attached on both sides of the joint zone (3) to an inner wall (5) of the pipe (1) or of the container, and a sealing plate (11) is arranged in a sealing manner on the inner wall (5) of the pipe (1) or of the container.

12. Method according to claim 10 or claim 11, **characterized in that** the sealing plate (11) has at least one seal (21) on its outer diameter, **in that** the seal (21) seals the gap between the inner wall (5) of the pipe (1) or of the container and the sealing plate (11), **in that** the seal (21) is designed as a metal seal, and **in that** the seal (21) is soldered or welded to the inner wall (5) of the pipe (1).

13. Method according to any of claims 10 to 12, **characterized in that** the retaining element (13) is frictionally attached to the inner wall (5) of the pipe (1) or of the container.

14. Method according to any of claims 10 to 12, **characterized in that** temporary attaching points are welded to the inner wall (5) of the pipe (1) or of the container, and **in that** the retaining element (13) or the sealing plate (11) is screwed to the temporary attaching points.

## Revendications

1. Dispositif permettant de rendre étanche une zone d'assemblage (3) entre deux tubes (1) ou segments de récipient à paroi épaisse, comprenant au moins une plaque d'étanchéité (11) et un élément de retenue (13), dans lequel l'élément de retenue (13) peut être fixé de manière amovible sur une paroi intérieure (5) du tube (1) ou du récipient, dans lequel l'élément de retenue (13) absorbe les forces de pression agissant sur la plaque d'étanchéité (11) et les introduit dans le tube (1) ou le récipient ou une seconde plaque d'étanchéité, et dans lequel une optique laser (15) est présente sur la plaque d'étanchéité (11).

2. Dispositif selon la revendication 1, **caractérisé en ce que** la plaque d'étanchéité (11) présente au moins un joint d'étanchéité (21) sur son diamètre extérieur, et **en ce que** le joint d'étanchéité (21) est conçu pour rendre étanche la fente entre la paroi intérieure (5) du tube (1) ou du récipient et la plaque d'étanchéité (11).

3. Dispositif selon la revendication 2, **caractérisé en ce que** la plaque d'étanchéité (11) présente sur son diamètre extérieur deux joints d'étanchéité (21) ou plus disposés les uns derrière les autres, et **en ce que** les joints d'étanchéité (21) sont conçus pour rendre étanche la fente entre la paroi intérieure (5) du tube (1) ou du récipient et la plaque d'étanchéité (11).

4. Dispositif selon la revendication 3, **caractérisé en ce que** les joints d'étanchéité (21) sont conçus pour former un espace de dépression annulaire (25) entre deux joints d'étanchéité (21) adjacents, et **en ce qu'**une conduite de dépression (27.2) est conçue pour déboucher dans l'espace de dépression annulaire (25).

5. Dispositif selon l'une des revendications 2 à 4, **caractérisé en ce que** les joints d'étanchéité (21) sont conçus en tant que tubes annulaires gonflables, en tant que joints toriques ou en tant que joints d'étanchéité à lèvres.

6. Dispositif selon l'une des revendications 2 à 4, **caractérisé en ce que** les joints d'étanchéité (21) sont conçus en tant que joints d'étanchéité métalliques.

7. Dispositif selon l'une des revendications précédentes, **caractérisé en ce qu'**un appareil de renvoi, un entraînement rotatif (19) et/ou un appareil de positionnement sont présents sur la plaque d'étanchéité (11).

8. Dispositif selon l'une des revendications précédentes, **caractérisé en ce qu'**au moins une conduite de dépression (27) est prévue sur la plaque d'étanchéité (11).

9. Dispositif selon l'une des revendications précédentes, **caractérisé en ce que** l'élément de retenue (13) comprend au moins un actionneur pour presser l'élément de retenue (13) contre la paroi intérieure (5) du tube (1) ou du récipient et le relier à celui-ci par friction.

10. Procédé pour l'assemblage de deux tubes (1) ou segments de récipient à paroi épaisse par une soudure circulaire périphérique, dans lequel un élément de retenue (13) est fixé de manière amovible sur une paroi intérieure (5) du tube (1) ou du récipient au moins sur un côté d'une zone d'assemblage (3), dans lequel une plaque d'étanchéité (11) est disposée de manière étanche sur la paroi intérieure (5) du tube (1) ou du récipient au moins sur un côté de la zone d'assemblage (3), dans lequel la plaque d'étanchéité (11) et l'élément de retenue (13) sont accouplés l'un à l'autre de telle sorte que l'élément de retenue (13) absorbe les forces de pression agissant sur la plaque d'étanchéité (11) et les transfère dans le tube (1) ou le segment de récipient, dans lequel l'air est aspiré dans une chambre à vide (9) à l'intérieur du tube (1) ou du segment de récipient, et dans lequel une soudure circulaire périphérique est ensuite produite par soudage au laser.

11. Procédé selon la revendication 10, **caractérisé en ce que**, sur les deux côtés de la zone d'assemblage (3), un élément de retenue (13) est fixé de manière amovible sur une paroi intérieure (5) du tube (1) ou du récipient et une plaque d'étanchéité (11) est disposée de manière étanche sur la paroi intérieure (5) du tube (1) ou du récipient.

12. Procédé selon la revendication 10 ou 11, **caractérisé en ce que** la plaque d'étanchéité (11) présente au moins un joint d'étanchéité (21) sur son diamètre extérieur, **en ce que** le joint d'étanchéité (21) rend étanche la fente entre la paroi intérieure (5) du tube (1) ou du récipient et la plaque d'étanchéité (11), **en ce que** le joint d'étanchéité (21) est conçu comme un joint d'étanchéité métallique, et **en ce que** le joint d'étanchéité (21) est brasé ou soudé à la paroi intérieure (5) du tube (1).

13. Procédé selon l'une des revendications 10 à 12, **caractérisé en ce que** l'élément de retenue (13) est fixé à force à la paroi intérieure (5) du tube (1) ou du récipient.

14. Procédé selon l'une des revendications 10 à 12, **caractérisé en ce que** des points de fixation temporaires sont soudés sur la paroi intérieure (5) du tube (1) ou du récipient, et **en ce que** l'élément de retenue (13) ou la plaque d'étanchéité (11) est vissé aux points de fixation temporaires.
